(19) Europäisches Patentamt / European Patent Office / Office européen des brevets

(11) **EP 3 513 083 B1**

(12) **EUROPEAN PATENT SPECIFICATION**

(45) Date of publication and mention of the grant of the patent:
**22.03.2023 Bulletin 2023/12**

(21) Application number: **17851541.7**

(22) Date of filing: **14.09.2017**

(51) International Patent Classification (IPC):
*F16B 23/00* (2006.01)    *F16B 35/06* (2006.01)
*F16B 35/04* (2006.01)

(52) Cooperative Patent Classification (CPC):
**F16B 23/003**

(86) International application number:
**PCT/US2017/051602**

(87) International publication number:
**WO 2018/053155 (22.03.2018 Gazette 2018/12)**

(54) **DRIVE SYSTEM WITH FULL SURFACE DRIVE CONTACT**

ANTRIEBSSYSTEM MIT VOLLFLÄCHENANTRIEBSKONTAKT

SYSTÈME D'ENTRAÎNEMENT À CONTACT D'ENTRAÎNEMENT PLEINE LA SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2016 US 201662395096 P**

(43) Date of publication of application:
**24.07.2019 Bulletin 2019/30**

(73) Proprietor: **Acument Intellectual Properties LLC Sterling Heights, MI 48314 (US)**

(72) Inventor: **GOSS, David, C.
Rockford, IL 61103 (US)**

(74) Representative: **Franks & Co Limited
15 Jessops Riverside
Brightside Lane
Sheffield S9 2RX (GB)**

(56) References cited:
| | |
|---|---|
| WO-A1-2016/149526 | US-A- 5 577 871 |
| US-A- 5 957 645 | US-A1- 2003 059 233 |
| US-A1- 2011 116 895 | US-A1- 2013 068 075 |
| US-A1- 2016 223 005 | US-B1- 6 186 718 |
| US-B1- 6 257 851 | |

• TONG, SHIH-HSI et al.: "Involute-Based Screw Driver Profiles With High Load Capacity", Journal of Mechanical Design, vol. 134, no. 3, 17 February 2012 (2012-02-17), page 2, XP9513912,

## Description

## Technical Field

The present invention relates to a fastener comprising at least one of an external drive profile and a recess.

## Background

Reference is made to United States Patent application Serial no 15/072,028 filed March 16, 2016; United States Patent application Serial no 62/135,390 filed March 19, 2015; and United States Patent application Serial no 62/395,096 filed September 15, 2016.

Fastener drive systems, involve a bit and a fastener, as well as a punch for forming a recess in the fastener.

Typical fastener drive system designs or geometries result in various surface contact patterns between the drive tool (i.e., bit) and fastener drive feature (i.e., recess). For example, some drive system geometries result in a "point" contact surface pattern, meaning that when the bit is rotated to initial contact with the recess (with near zero reaction torque), it contacts the recess at a point (or a plurality of points around the recess).

Other drive system geometries result in a "line" contact surface pattern, meaning that when the bit is rotated to initial contact, it contacts the recess at a plurality of lines. To place the bit inside of the recess in the fastener, there has to be some sort of gap between the bit and recess. As the bit is rotated, the gap between the bit and recess narrows until there is line contact with the sidewalls of the recess. Both point and line contact systems generate high stresses throughout the drive system and can also add to bit failure.

Still other drive system geometries result in an "area" contact surface pattern from the end of the bit to the top of the recess. Area contact surface patterns are known from Tong. Shih-His, and Daniel C.H Yang "Involute-Based Screw Driver Profiles With High Load Capacity" Journal of Mechanical Design, vol. 134. Generally, an "area" contact surface pattern is more beneficial than a "line" contact surface pattern, and a "line" contact surface pattern is more beneficial than a "point" contact surface pattern.

However, even with regard to an "area" contact surface pattern, as bit-recess reaction torque (i.e., drive torque) increases, the drive bit geometry is elastically distorted (i.e., twisted and compressed), as well as the recess geometry (i.e., compressed), causing the bit-recess contact surface pattern to change and shift from the end of the bit toward the top of the recess. As the reaction torque increases, the surface contact pattern area tends to decrease, thus further increasing bit-recess contact stresses. The increased contact stresses at the top of the recess may damage the fastener finish (i.e., coating), and may lead to recess failure (ream-out). The increased contact stresses on the bit (and twisting) may cause premature wear, recess failure and fatigue failure.

Some prior threaded fasteners, such as disclosed in United States Patent US 5957645 A, achieve an "area" contact surface pattern by their drive surfaces being formed of polygon involutes which when upon engagement the stress upon the walls of the driveable-engageable surfaces of the recess is outputted upon a relatively broad area thereby applying and distributing the stress over that broad area. The overall configuration of the drive surfaces enabling high levels of torque to be delivered whilst minimising the risk of camming out and thus damaging the bit and fastener.

Other prior threaded fasteners feature a center post extending upwards from the recess of the fastener. Upwards extending center posts are known for United States Patent US 6186718 B1 discloses a fastener having a head with a triangular recess and a triangular centremost extending upwards from the recess. The result of the upwards extending center post is improved torque distribution and which reduces the likelihood of camming and tool damage.

US6186718 B1 provides no teaching or suggesting of the fastener having any other form than triangular.

## Summary

An object of an embodiment of the present invention is to provide a drive system with full surface drive contact.

An object of an embodiment of the present invention is to provide a drive system that tends to maximize the surface contact pattern or area at typical bit-recess reaction (drive) torque values, thereby tending to minimize bit-recess surface contact stresses, coating damage, recess ream and premature bit fatigue failure.

According to one aspect of the invention there is provided a fastener comprising at least one of an external drive profile and a recess (222, 300); a plurality of lobes (226, 302) on at least one of the external drive profile and the recess, each lobe comprising a plurality of drive surfaces (230, 304) each of said drive surfaces formed of at least one polygon involute, each polygon involute comprising a plurality of arcs, each arc having a radius (R1, R2), each arc being concave relative to the centre of the fastener and each arc having a constant but different radius, characterised in that said fastener further comprises a plurality of walls (232,306) which extend between adjacent said lobes (226, 302), wherein said walls are either flat, concave circular or concave vertex relative to the centre of the fastener; and wherein said recess (222, 300) further comprises a centre post (224, 308).

Briefly, an embodiment of the present invention provides a drive system which includes a fastener, wherein the fastener comprises drive surfaces which are formed of polygon involutes formed of a plurality of arcs. With regard to the arcs that define the drive surfaces, each arc has a constant radius (i.e., is a segment of a circle).

## Brief Description of the Drawings

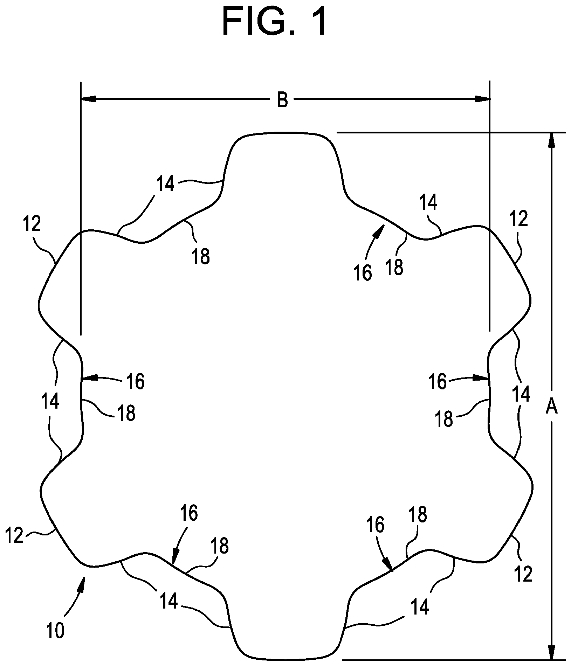

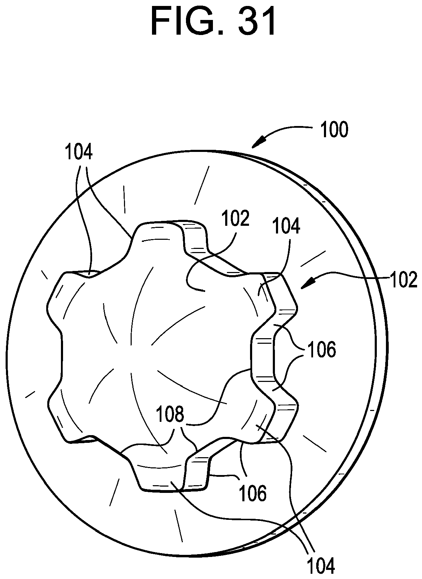

The organization and manner of the structure and operation of the invention, together with further objects and advantages thereof, may best be understood by reference to the following description taken in connection with the accompanying drawings wherein like reference numerals identify like elements in which Figures 1 - 41 and Figures 43 - 52 are not encompassed by the claims but are considered as being useful for understanding the invention:

Figure 1 illustrates a recess (or punch); ;
Figure 2 is a cross-sectional view of a bit which corresponds to the recess shown in Figure 1;
Figure 3 shows the bit of Figure 2 inserted in the recess of Figure 1;
Figure 4 is similar to Figure 3, but shows the bit and recess after the bit has been rotated into full surface contact with driving walls of the recess
Figure 5 is an enlarged view which clearly shows the full surface contact;
Figure 6 is an enlarged view which shows a gap between the bit and the recess before the bit is rotated;
Figures 7 and 8 show portions of the recess shown in Figure 1, but also indicate some dimensions thereof;
Figures 9 and 10 show portions of the bit shown in Figure 2, but also indicate some dimensions thereof;
Figures 11-13 provide views relating to the recess shown in Figure 1;
Figures 14-21 provide views relating to alternative embodiments;
Figure 22 is a view which compares the embodiments; and
Figures 23-27 illustrate different versions of extending walls provided between lobes of recess; and
Figures 28-41 illustrate alternative embodiments.
Figure 42 illustrates a recess having a center post which in accordance with an embodiment of the present invention.
Figure 43 to 52 illustrate alternative embodiments.
Figure 53 illustrates an alternative embodiment of the present invention where the recess has a center post and a profile featuring seven lobes.

## Description of Illustrated Embodiments

While this invention may be susceptible to embodiment in different forms, there are shown in the drawings and will be described herein in detail, specific embodiments with the understanding that the present disclosure is to be considered an exemplification of the principles of the invention, and is not intended to limit the invention to that as illustrated.

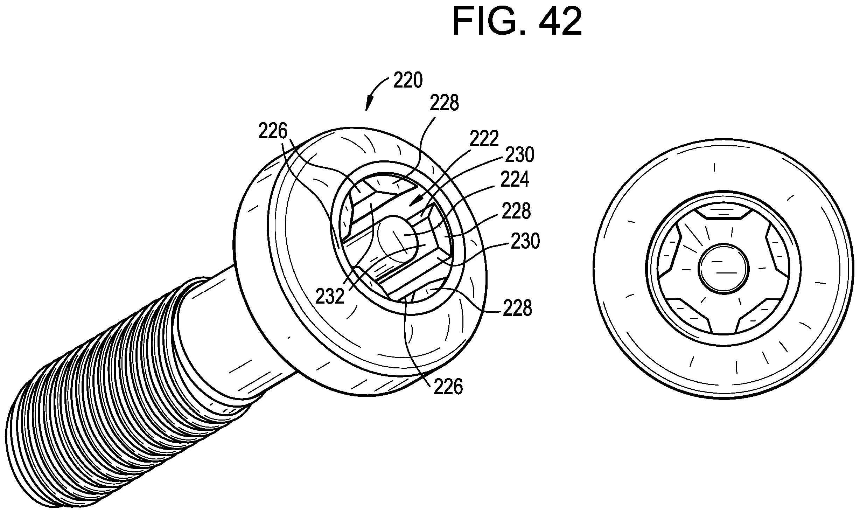

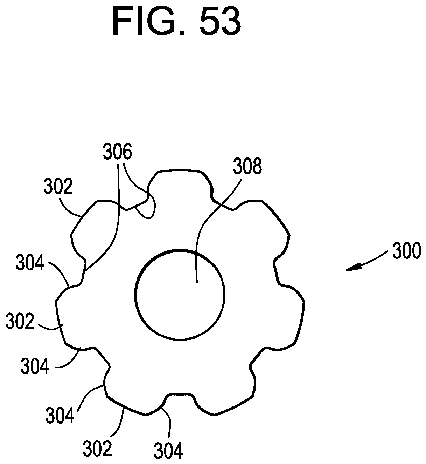

A plurality of embodiments of the present invention is disclosed herein in Figures 42 and 53. Each embodiment provides a drive system with full surface drive contact. Specifically, each embodiment includes a fastener, wherein the fastener includes a recess which comprises drive surfaces which are formed of either polygon involutes or is provided as being a single arc construction.

With regard to the term "involute," an involute is the locus of a point, initially on a base circle, which moves so that its straight line distance, along a tangent to the circle, to the tangential point of contact, is equal to the distance along the arc of the circle from the initial point to the instant point of tangency. Alternatively, an involute is the locus of a point on a straight line when the straight line rolls round the circumference of a circle without slipping. The involute is best visualized as the path traced out by the end of, for example, string or a piece of cotton, when the string or cotton is unrolled from its cylindrical reel.

To produce an involute profile, a line is traceable by unwinding, for example, a string from a cylinder. The cylinder can be referred to as the base circle. At any point during this unwinding, the generation line (i.e., the string) is at a tangent with the cylinder and is normal to the involute curve. If two involute profiles were in contact with each other, the generating line would be tangent to both cylinders, which is often called the pressure line.

Mathematically, an involute curve is taken from the following equation:

$$\theta = \beta - tan^{-1}\sqrt{\frac{R^2 - R_b^2}{R_b}}$$

Wherein R = the radius to any point on the involute; $\Theta$ = the angle from the start of the involute to radius R; and $\beta$ = the angle through which the string has to be unwound.

With the generating line length equal to $\sqrt{R2 - R_b^2}$ and also the length of the circumference of the base circle subtended by the angle β such that

$$\sqrt{R^2 - R_b^2} = R_b\beta \ or \ \beta = \frac{\sqrt{R^2 - R_b^2}}{R_b}$$

And through substitution

$$\sqrt{R^2 - R_b^2} - tan^{-1}\sqrt{R^2 - R_b^2}$$

This allows the plotting of the involute curve in polar coordinates (R, $\Theta$).

It is common to write the angle as a function of the pressure angle ($\varphi$) in the form

$$\Theta = \tan \varphi - \varphi = Inv\ \varphi$$

Where $Inv\ \varphi$ is the Involute function, whose value is tabulated in many books for different gears. This can then be used in many calculations such as the determination of tooth thickness ($T_1$) at different radii, using the equations below.

$$\cos \varphi_2 = \frac{r_1 \cos \varphi_1}{r_2}$$

$$T_2 = 2r_2 \left[ \frac{T_1}{2r_1} + Inv\varphi_1 - Inv\varphi_2 \right]$$

It should be pointed out that a fastener, bit, punch, etc. may have drive surfaces which are not perfect polygon involutes under a microscope, given real life manufacturing processes and materials.

Figure 1 illustrates a recess 10, such as a recess in a fastener 11 or other structure (Figure 1 may also illustrate the end surface profile of a punch 10). Specifically, the recess 10 is configured to provide a plurality of lobes 12, each having drive surfaces 14 which are formed of polygon involutes. In the preferred embodiment, each drive surface is formed of a polygon involute comprised of two arcs, wherein each arc has a different radius, but each arc has a constant radius (i.e., each arc is a segment of a circle). Between each lobe 12 is a flute 16 which provides a wall 18 which extends between adjoining lobes 12. These walls 18, and the different shapes they may take, will be described in more detail later hereinbelow.

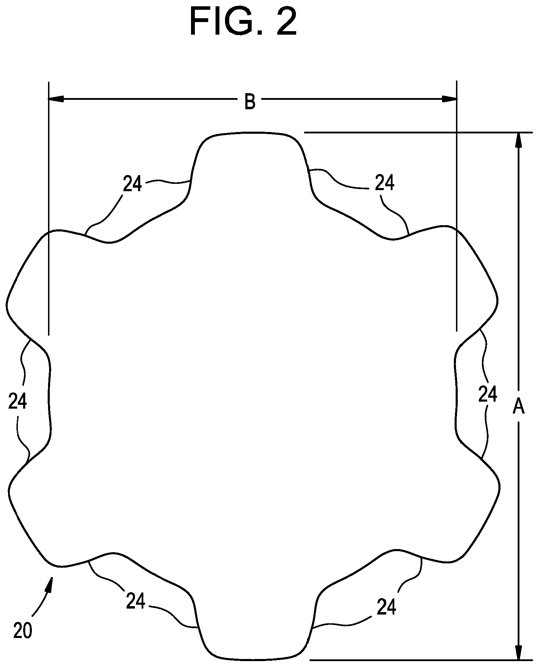

Figure 2 provides a cross-sectional view of a corresponding external drive such as a bit 20, where the bit 20 is provided in association with the recess 10 shown in Figure 1. Specifically, the profile of the external surface of the bit 20 corresponds to the profile of the recess 10 shown in Figure 1, such that the bit 20 is insertable in the recess 10, and is rotatable in either a clockwise or counter clockwise direction in order to drive the fastener in which the recess 10 is formed.

The bit 20 corresponds to the recess 10. As such, the bit 20 comprises a plurality of lobes 21, each lobe 21 comprising drive surfaces or drive walls 24 which are formed of polygon involutes. More specifically, preferably the drive surfaces 24 are formed of polygon involutes comprised of two arcs, and each arc has a constant radius (i.e., is a segment of a circle). Preferably, each of the walls 23 between the flutes 21 is at least one of flat, concave circular, convex vertex and concave vertex, as will be described more fully hereinbelow.

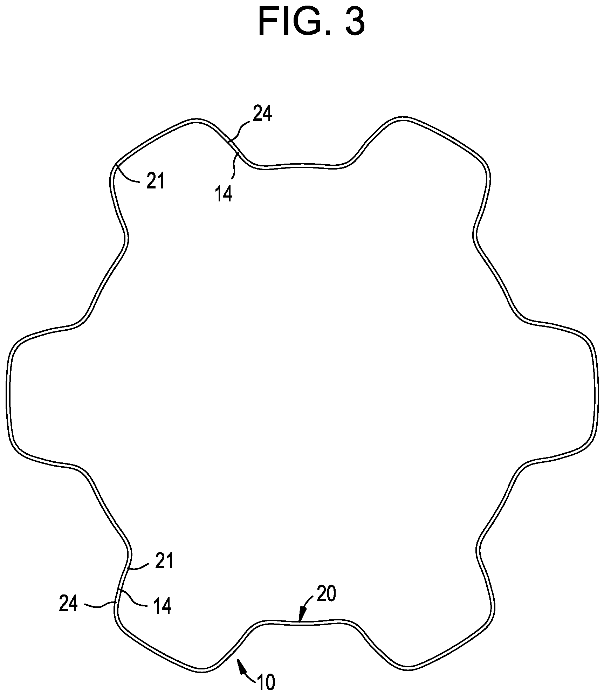

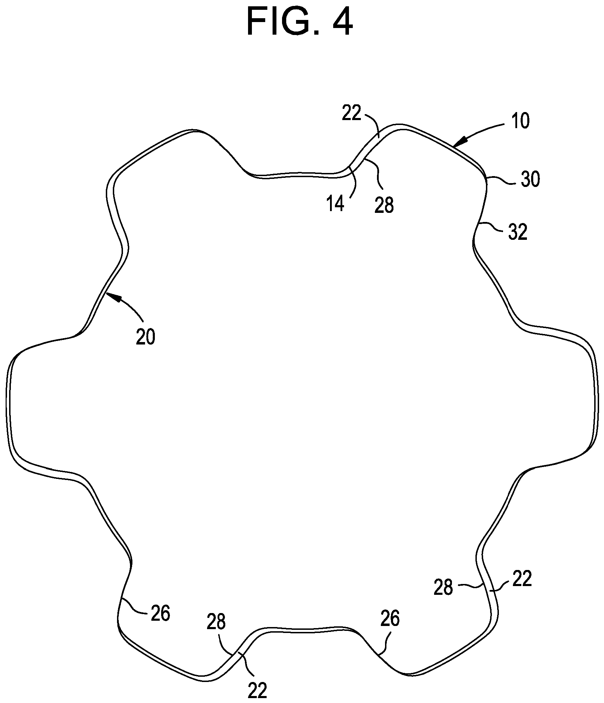

When the bit 20 is initially inserted in the recess 10, the bit 20 and recess 10 may appear as shown in Figure 3, wherein there are gaps 21 between drive walls 24 of the bit 20 and the drive walls 14 of the recess 10. Assuming the bit 20 is then rotated clockwise, the bit 20 and recess 10 may appear as shown in Figure 4, wherein leading walls 26 of the bit 20 engage corresponding drive walls 14 of the recess 10, while trailing walls 28 of the bit 20 are spaced away from corresponding drive walls 14 of the recess 10 to provide gaps 22.

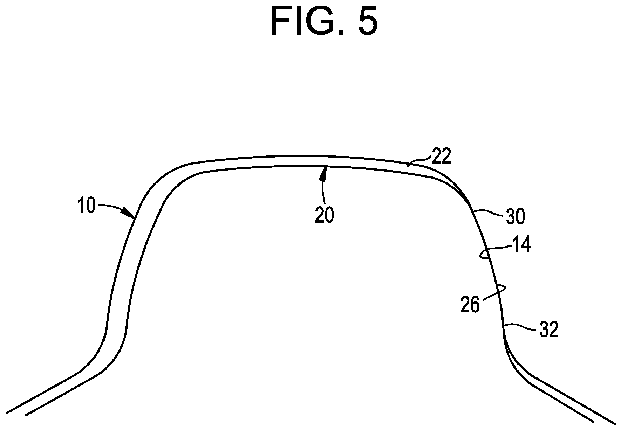

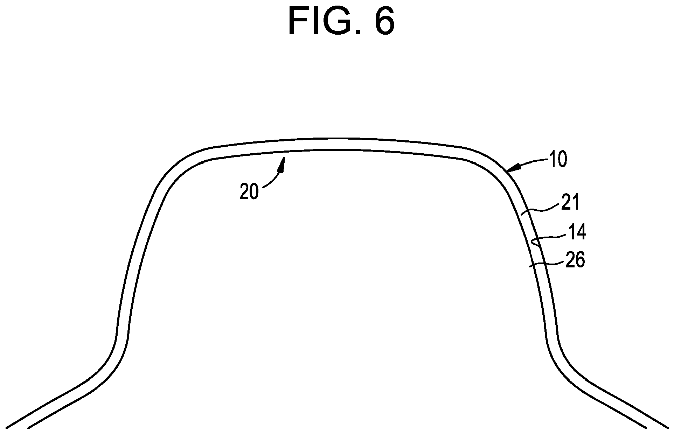

The full surface contact between the leading walls 26 of the bit 20 and the corresponding drive walls 14 of the recess 10 can best be seen in Figure 5, which provides an enlarged view of the interface between one of the leading walls 26 of the bit 20 and one of the drive walls 14 of the recess 10. The full surface contact extends from point 30 to point 32. On the other hand, the gap 21 between the leading walls 26 of the bit 20 and the corresponding drive walls 14 of the recess 10 before the bit 20 is rotated can best be seen in Figure 6, which provides an enlarged view of one of the leading walls 26 of the bit 20 and the corresponding drive wall 14 of the recess 10. As shown in Figure 4, but for the surface contact between points 30 and 32, the gap 22 between the bit 20 and the recess 10 is constant, and preferably remains constant while the bit 20 rotates.

While other configurations are disclosed herein, the two arc polygon involute configuration shown in Figures 1 and 2 is preferred. With this configuration, the blend radius (i.e., the section between each of the arcs) does not get washed away. Additionally, a minimal gap 22 is provided between the bit and recess. While each arc preferably has a different radius, each arc preferably has a constant radius (i.e., each arc is a segment of a circle). The A and B dimensions shown in Figure 1 are diameters. Having these diameters aids in the measurement of this feature, provides more lobular width in the A dimension, reduces the chance of chipping of the heading tool, and increases the bit area at the lobes.

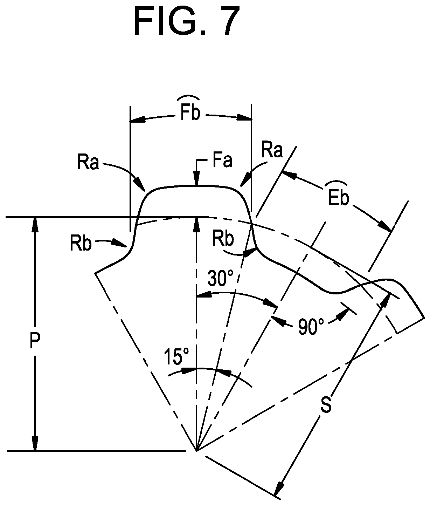

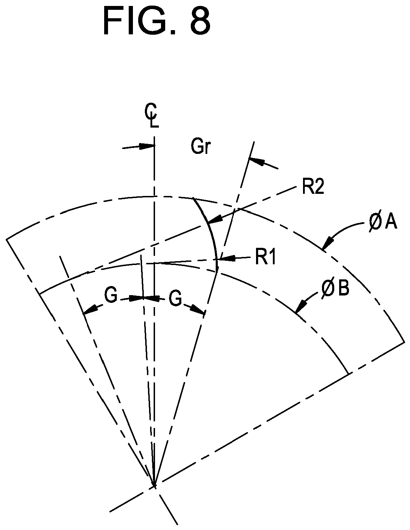

Figure 7 shows a portion of the recess shown in Figure 1, and indicates some of the dimensions. Figure 8 shows just one of the driving walls of the recess, and indicates some other dimensions, including the radius (R1 and R2) of each of the two arcs. As shown, while R1 does not equal R2, each one of R1 and R2 is constant. With regard to the actual values of each of the dimensions, one specific embodiment may provide that, for example (all values being in inches), R1=0.0198752778, R2=0.0397505556, A=0.155, B=0.1206, Fa=0.0086, Fb=0.0360759556, Ea=0.0086, Eb=0.0360759556, P=0.0689, S=0.0689, Ra=0.007 and Rb=0.005. With regard to Gr and G, Gr may be 17.9021442092 degrees and G (REF) may be 18.9716157232 degrees. This is just one embodiment and plenty other sizes, shapes, etc. are entirely possible.

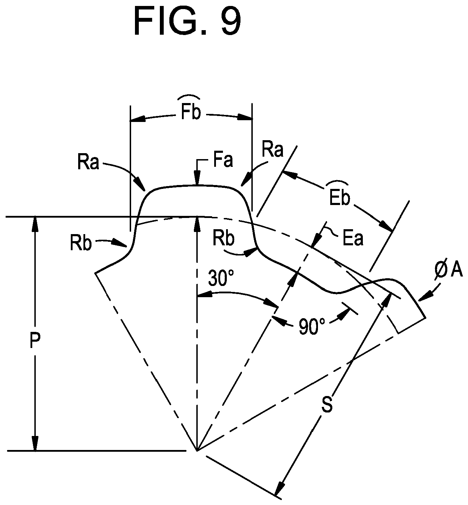

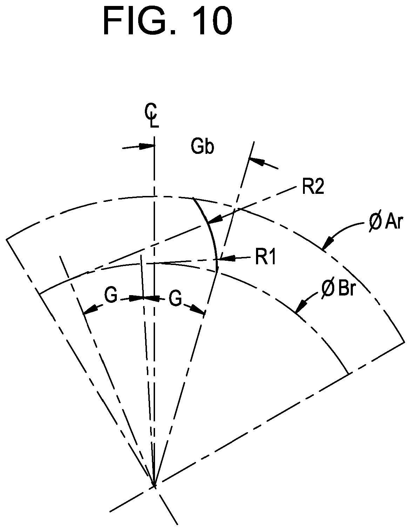

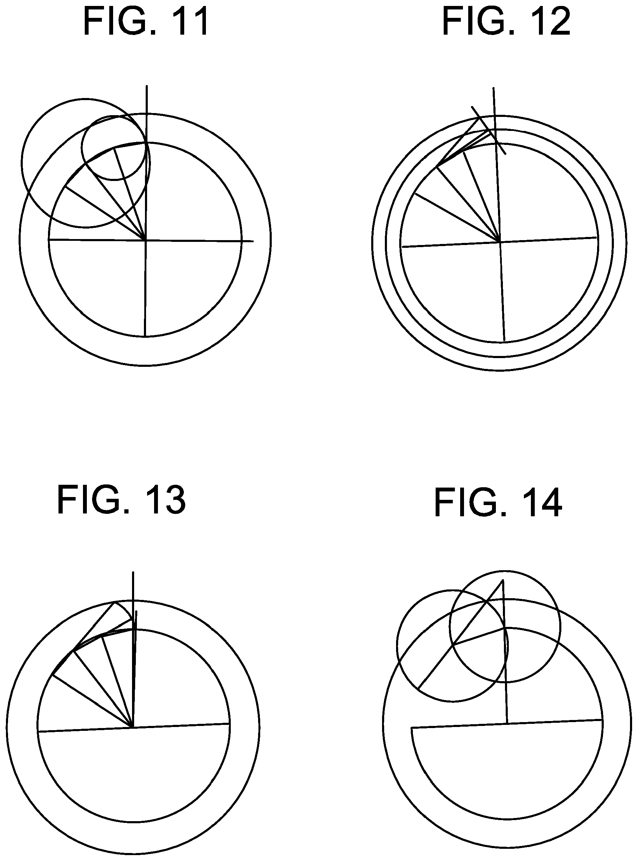

Figures 9 and 10 are similar to Figures 7 and 8, but relate to the bit 20 shown in Figure 2. As shown, the bit has a shape which corresponds to the recess. Figures 11-13 provide a plurality of views relating to the two arc configuration and are self-explanatory.

Figures 14-16 provide a plurality of views relating to an alternative embodiment and are also self-explanatory. Specifically, Figure 14-16 show a configuration where each of the drive walls of the recess is provided as being formed of a polygon involute comprising one arc, said arc having a constant radius (i.e., it is a segment of a circle).

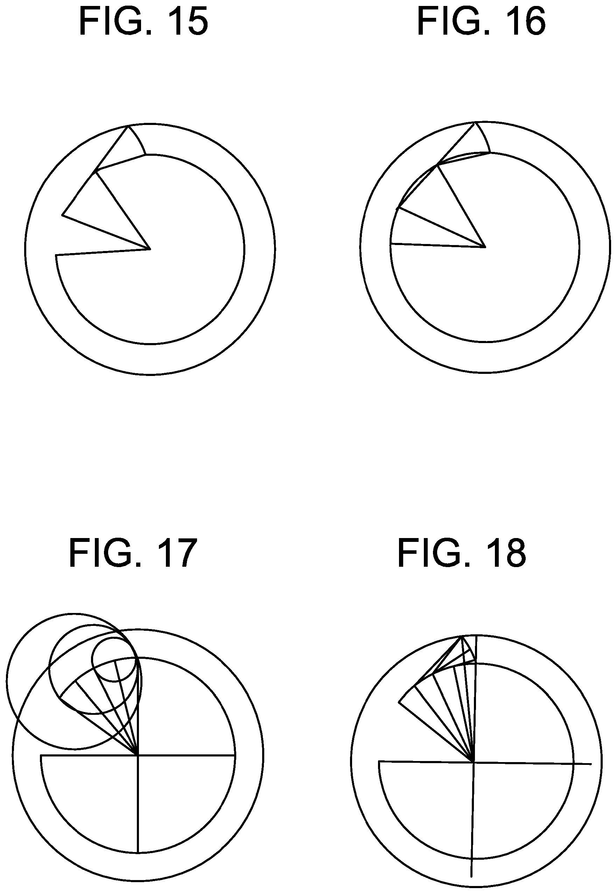

Figures 17-19 provide a plurality of views relating to yet another embodiment and are self-explanatory. Specifically, Figure 17-19 show a configuration where each of the drive walls of the recess is provided as being formed of a polygon involute comprising three arcs, wherein each arc has a different radius, but each arc has a constant radius (i.e., each arc is a segment of a circle).

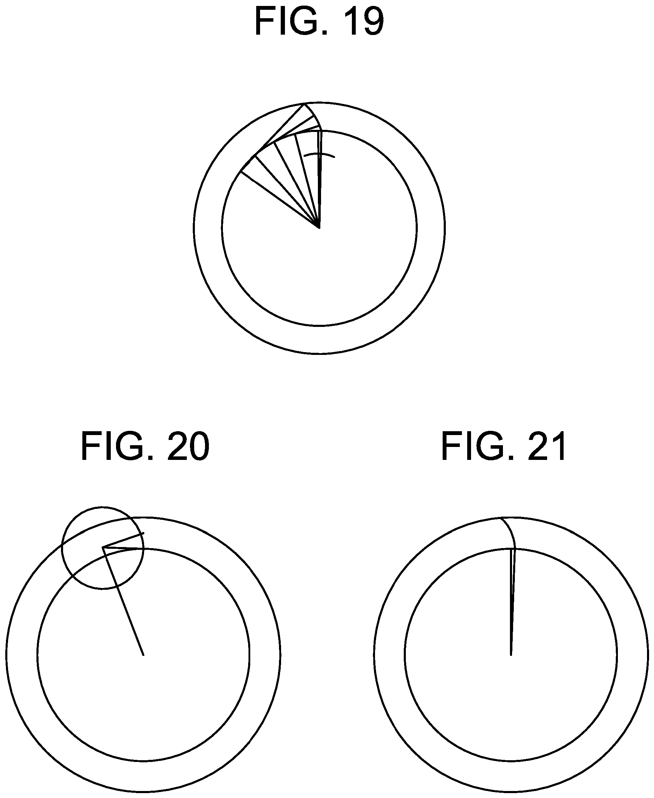

Figures 20-21 provide a plurality of views relating to a still further embodiment and are self-explanatory. Specifically, Figure 20-21 show a configuration where each of the drive walls of the recess are provided as being of a single arc construction, wherein the radius of the arc is constant (i.e., the arc is a segment of a circle).

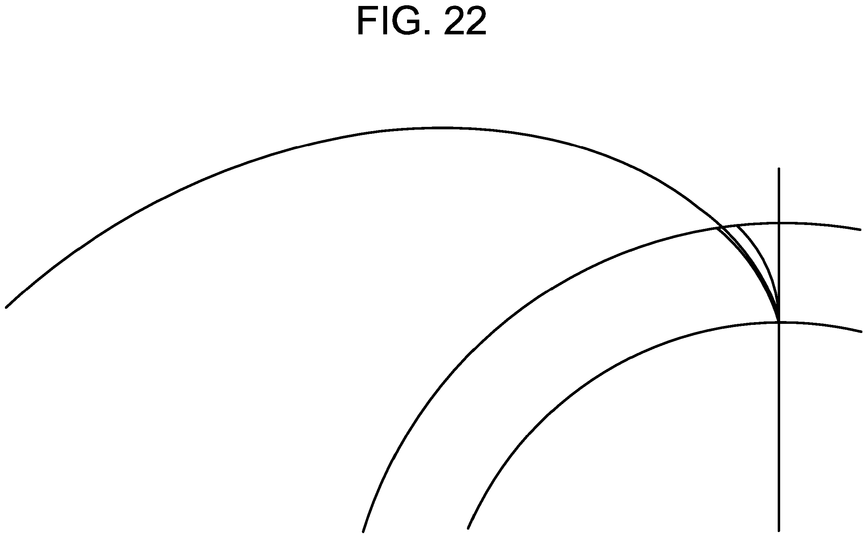

Figure 22 is a view which compares the different embodiments. Reference numeral 200 identifies circle involute-high precision, reference numeral 202 identifies a polygon involute-1 arc, reference numeral 204 identifies a polygon involute-2 arcs, reference numeral 206 identifies a polygon involute-3 arcs, and reference numeral 208 identifies a one arc construction (perpendicular arc).

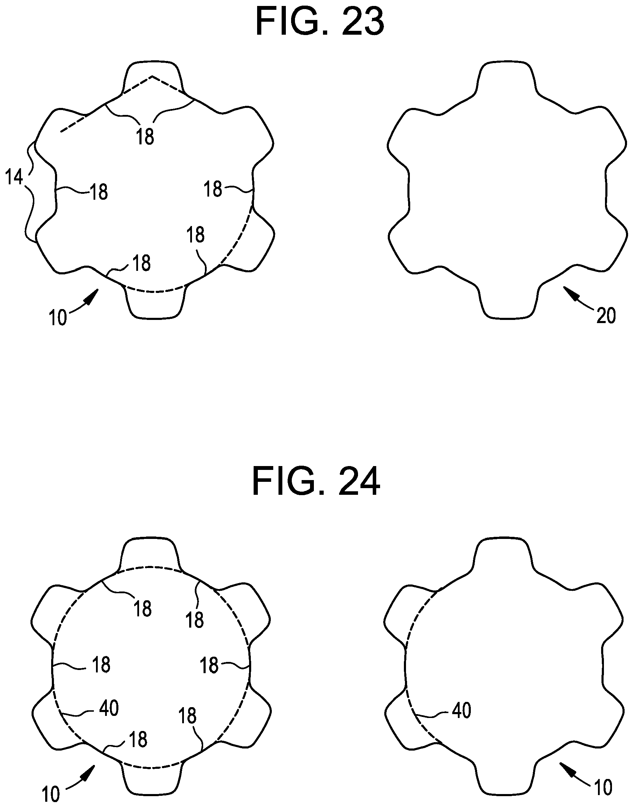

Figures 1 and 2 illustrate a configuration wherein walls 18 between the lobes 12 are provided as being flat. This is shown very well in Figure 23, which shows the recess 10 on the left, the bit 20 on the right. This is a preferred configuration with regard to walls 18 because it provides that the walls 18, collectively define a hexagon shape, thus a hex tool can be inserted in the recess and used to drive the fastener (in addition to the corresponding bit shown on the right in Figure 23).

Each of Figures 24-27 shows an alternative embodiment, and in each case the recess is shown on the left, and the corresponding bit (similarly shaped) is shown on the right. In the embodiment shown in Figure 24, each of the walls 18 between the flutes is semi-circular (i.e., convex circular) and identifies the circle with reference numeral 40.

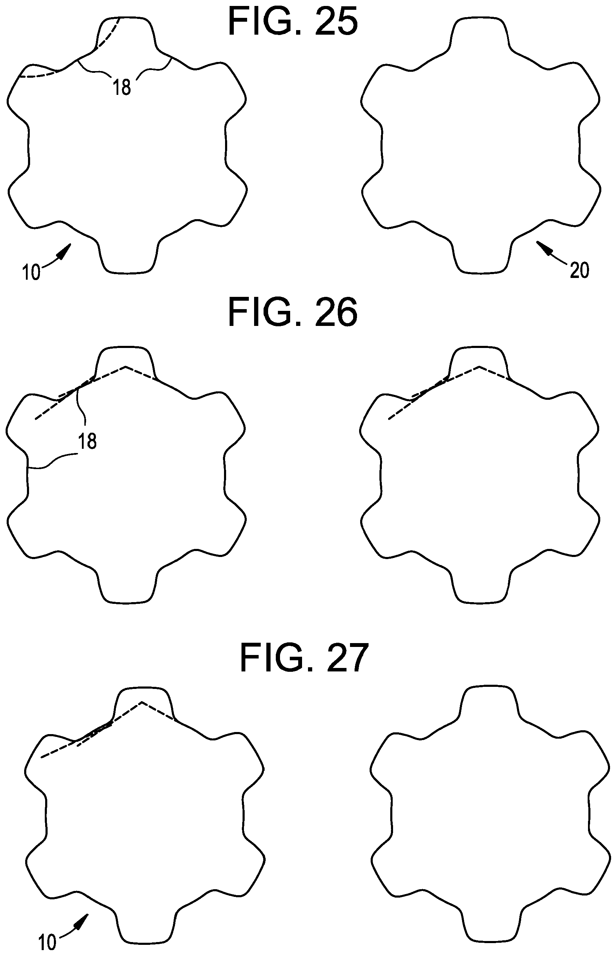

In the embodiment shown in Figure 25, each of the walls 18 between the lobes 14 is concave circular. In the embodiment shown in Figure 26, each of the walls 18 between the lobes 14 is a convex vertex. In the embodiment shown in Figure 27, each of the walls 18 between the lobes 14 is a concave vertex.

Although the depths of none of the recesses disclosed herein has been specifically shown or described, the depth of any of the recesses can take any appropriate form, depending on the application, and the desired properties of the drive system. For example, the depth can be flat (for example, the depth at the bottom of the recess can be flat), conical, have a spherical bottom, etc. For example, the depth may be such that each of the driving walls is semi-cylindrical with regard to going down into the recess.

With regard to the bit provided to engage any of the recesses disclosed herein, preferably the bit is provided as being slightly helical (i.e., pre-twisted). This way the use of an area contact pattern recess geometry is combined with a corresponding slightly helical bit geometry. Consequently, at near zero reaction torque, the end of the bit first contacts the recess and, as the torque increases, the bit-recess surface contact pattern area expands and extends from the end of the bit to the top of the recess.

While embodiments of the present invention have been described as being implemented in the form of a recess in the head of a fastener, embodiments not within the scope of the claimed invention may take the form of the external drives (such as bits) having external profiles which are consistent with the recesses which have been described. In fact, the drawings provided herein would even apply to such embodiments as well. Additionally, while the drawings show a six lobe system, the present invention can be implemented with regard to systems involving either more or fewer lobes, such as three, four or five lobe systems.

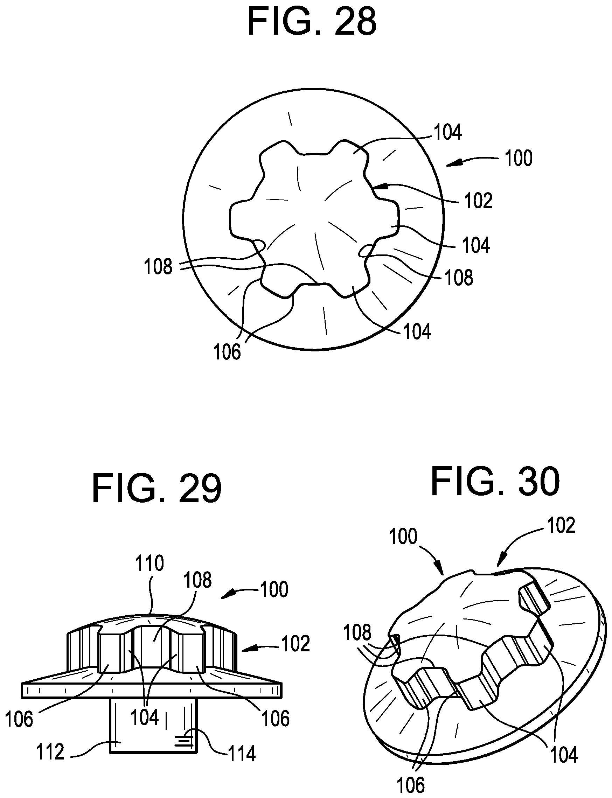

Figures 28-31 illustrate a fastener 100 having an external drive profile 102 thereon. The external drive profile 102 comprises a plurality of lobes 104, each lobe 104 comprising drive surfaces or drive walls 106 which are formed of polygon involutes. More specifically, preferably each drive surface 106 is formed of polygon involutes comprised of two arcs (or is a single arc construction), and each arc has a constant radius (i.e., is a segment of a circle). The walls 108 between each of the drive surfaces 106 can take many different forms and shapes, as was described hereinabove with regard to the other embodiments. As shown in Figures 29 and 30, the external drive profile 102 may have a curved top surface 110. The shaft 112 (only part of which is shown in Figure 29) preferably has a thread formed thereon (as indicated by lines 114).

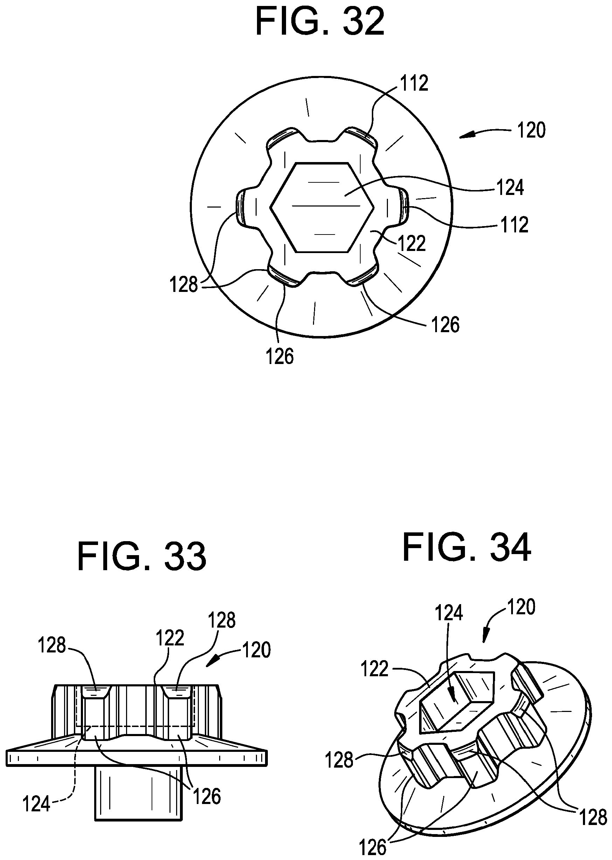

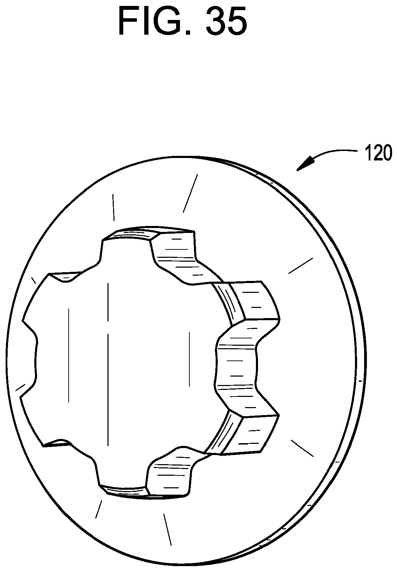

Figures 32-34 illustrate a fastener 120 much like that which is shown in Figures 28-31, with the only differences being: the top surface 122 is flat (instead of being curved) and has a hexagon-shaped recess 124 formed therein, and each of the lobes 126 has a truncation 128 proximate the top surface 122. These differences not only provide weight savings (i.e., compared to fastener 100 shown in Figures 28-31), but also provide an additional internal drive surface via the hexagon-shaped recess 124. Figure 35 shows the same fastener 120, but shows the fastener 120 either without the hexagon-shaped recess 124 or before the hexagon-shaped recess 124 is formed (such as punched) therein. The recess 124 can take shapes other than a hexagon to provide a drive surface which can be driven with a correspondingly-shaped driver.

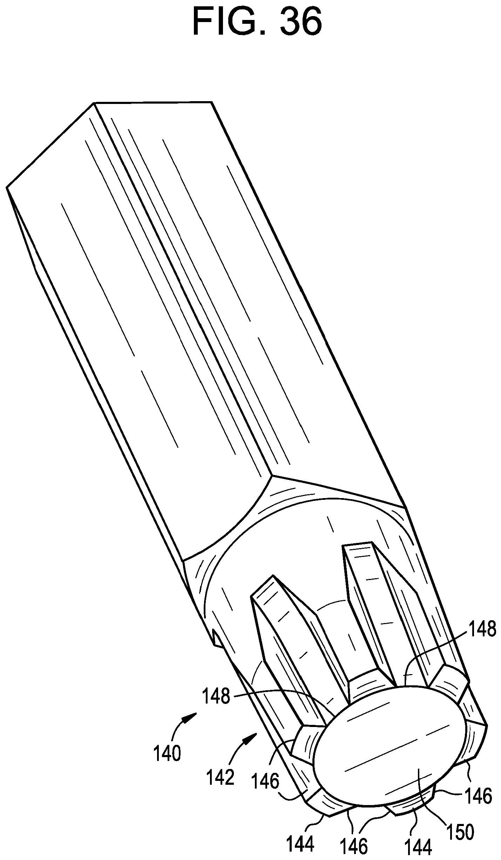

Figure 36 illustrates a bit (i.e., driver) 140 which has a drive surface profile 142 that comprises lobes 144 configured to provide a stick fit viz-a-viz a standard recess in a fastener. The drive surface profile 142 of the bit has drive surfaces 146 formed of polygon involutes. More specifically, preferably each drive surface is formed of polygon involutes comprised of two arcs (or is a single arc construction), and each arc has a constant radius (i.e., is a segment of a circle). The walls 148 between the drive surfaces 146 can take many different forms and shapes, as was described hereinabove with regard to the other embodiments. As shown, an end surface 150 of the bit 140 can be flat.

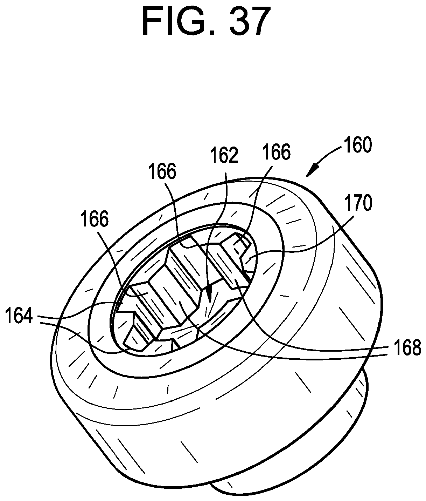

Figure 37 illustrates a fastener 160 having a recess 162. The recess 162 provides lobes 164, wherein each lobe 164 comprises drive surfaces or drive walls 166 which are formed of polygon involutes. More specifically, preferably each drive surface 166 is formed of polygon involutes comprised of two arcs (or is a single arc construction), and each arc has a constant radius (i.e., is a segment of a circle). The walls 168 between each of the drive surfaces 166 can take many different forms and shapes, as was described hereinabove with regard to the other embodiments. Preferably, as the walls 168 go down into the recess, they taper inward (i.e., the distance between a wall 168 and a wall 168 one hundred eighty degrees away in the recess 162 is greater at the top 170 of the recess 162 than it is as the walls 168 progress down into the recess 162).

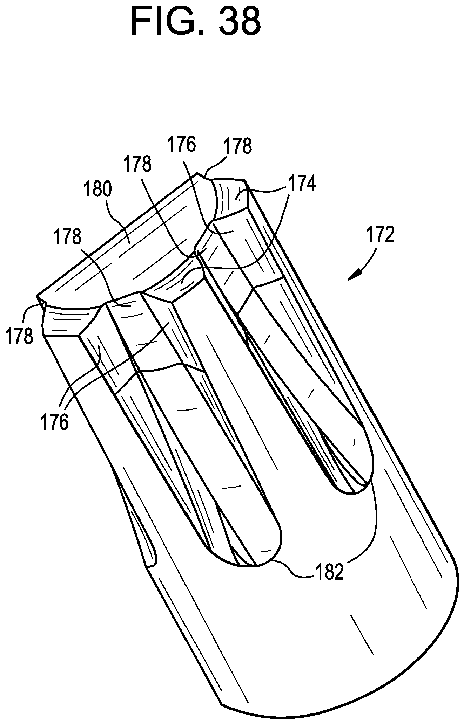

Figure 38 provides a partial view of a bit 172 which can be used to drive the fastener 160 shown in Figure 37. As shown in Figure 38, the bit 172 corresponds in shape to the recess 162 of the fastener 160, and has lobes 174, wherein each lobe 174 comprises drive surfaces or drive walls 176 which are formed of polygon involutes. More specifically, preferably each drive surface 176 is formed of polygon involutes comprised of two arcs (or is a single arc construction), and each arc has a constant radius (i.e., is a segment of a circle). The walls 178 between each of the drive surfaces 176 can take many different forms and shapes, as was described hereinabove with regard to the other embodiments. However, preferably as the walls 178 progress along the bit 172 from the end 180 of the bit 172, the walls 178 taper outwardly (i.e., the distance between a wall 178 and a wall 178 one hundred eighty degrees away is less at the end 180 of the bit 172 than it is as the walls 178 progress down along the bit (i.e., moving toward points 182)).

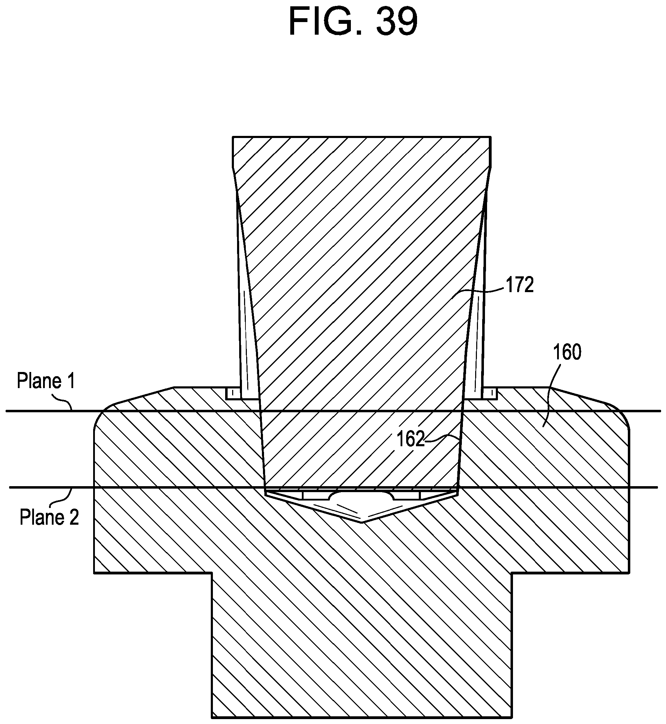

Figure 39 provides a cross-sectional view showing the bit 172 (see Figure 38) inserted in the recess 162 of the fastener 160 (see Figure 37), and is self-explanatory.

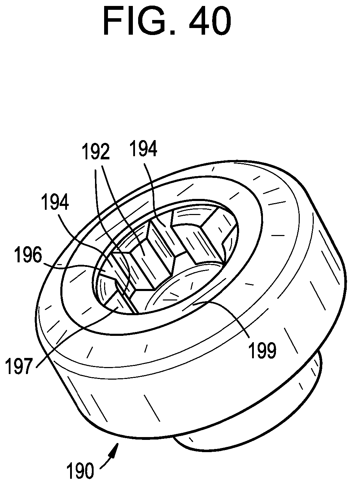

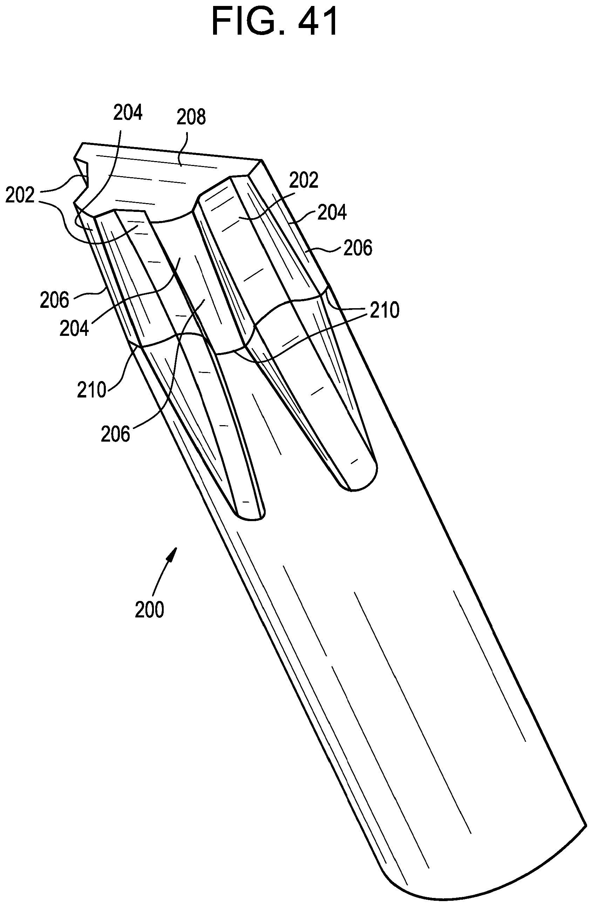

Figures 40 and 41 illustrate a fastener 190 and bit 200, respectively, each of which are much like the fastener 160 and bit 172 shown in Figures 37 and 38, except instead of walls 192, 202 being tapered, those walls 192, 202 are straight while walls 194, 204 are tapered. Specifically, the walls 194 of each lobe 196 of the recess 197 in the fastener 190 (see Figure 40) taper inwardly as the walls 194 progress from the end 199 of the recess 197, down into the recess 197. Correspondingly, the walls 204 of each lobe 206 of the bit 200 (see Figure 41) taper outwardly as the walls 204 progress from the end 208 of the bit 200, down along the bit (i.e., moving toward lines 210).

Figure 42 illustrates a fastener 220 in accordance with an embodiment of the present invention, having a recess 222 which has a center post 224, and which effectively provides a 5-lobe drive system with unequal spacing between the lobes 226 and flutes 228. The fastener 220 is in accordance with an embodiment of the present invention. Each lobe 226 has drive surfaces 230 formed of polygon involutes. More specifically, preferably each drive surface 230 is formed of polygon involutes comprised of two arcs (or is a single arc construction), and each arc has a constant radius (i.e., is a segment of a circle). The walls 232 between the drive surfaces 230 can take many different forms and shapes, as was described hereinabove with regard to the other embodiments.

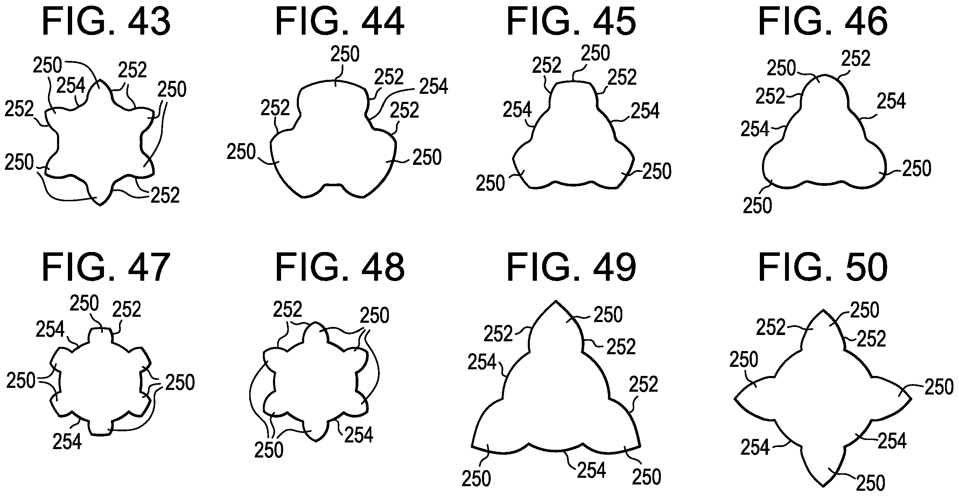

Figures 43-50 illustrate various profiles (each of which can correspond to a recess in a fastener, a punch for making the recess in a fastener, or a bit for driving a fastener) showing a various number of lobes, wherein each lobe has drive surfaces that extend to an end of the lobe. Specifically, each shape shown in Figures 43, 47 and 48 has six lobes 250, each shape shown in Figures 44, 45, 46 and 49 has three lobes 250, and the shape shown Figure 50 has four lobes 250. Regardless, each lobe 250 has drive surfaces 252 which are formed of polygon involutes. More specifically, preferably each drive surface 252 is formed of polygon involutes comprised of two arcs (or is a single arc construction), and each arc has a constant radius (i.e., is a segment of a circle). The walls 254 between the drive surfaces 252 can take many different forms and shapes, as was described hereinabove with regard to the other embodiments.

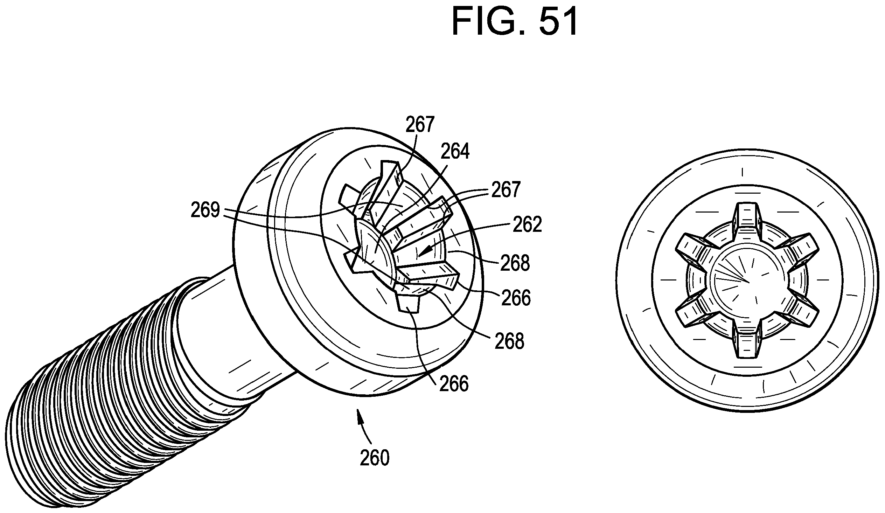

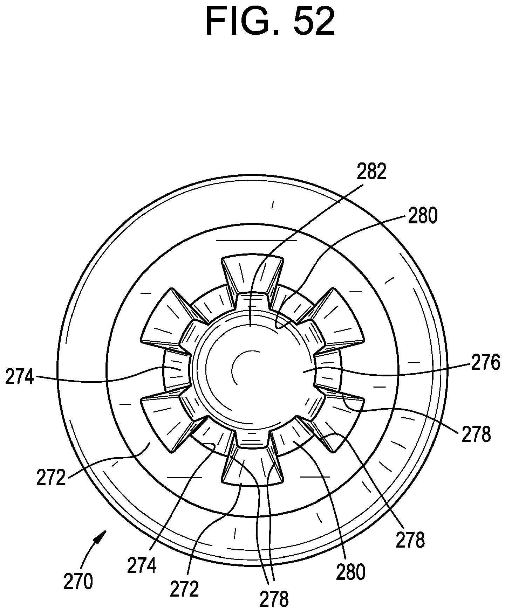

Figure 51 illustrates a fastener 260 that has a recess 262 with a tapered form, with a round pilot 264 at the bottom of the recess 262. The recess 262 has unequal lobes 266 and flutes 268, meaning that the width of each changes as the lobe 266 or flute 268 progresses down into the recess 262. Figure 52 illustrates a fastener 270 which is very similar to the fastener 260 shown in Figure 51, but which has equal lobes 272 and flutes 274, meaning that the width of each does not change as the lobe 272 or flute 274 progresses down into the recess 276. The lobe 266, 272 of each fastener 260, 270 has drive surfaces 267, 278 formed of polygon involutes. More specifically, preferably each drive surface 267, 278 is formed of polygon involutes comprised of two arcs (or is a single arc construction), and each arc has a constant radius (i.e., is a segment of a circle). The walls 269, 280 between the drive surfaces 267, 278 can take many different forms and shapes, as was described hereinabove with regard to the other embodiments. Either the lobes 266, 272, the flutes 268, 274, or both can be provided as tapering inwardly as the lobe 272 or flute 274 progresses from the top of the recess 276, down into the recess, toward the pilot 282 at the bottom of the recess 276.

Figure 53 illustrates a seven-lobed drive profile 300 which can effectively correspond to a recess in a fastener, a punch for making the recess in a fastener, or a bit for driving a fastener. The profile is in accordance with an embodiment of the present invention, and each lobe 302 has drive surfaces 304 formed of polygon involutes. More specifically, preferably each drive surface 304 is formed of polygon involutes comprised of two arcs (or is a single arc construction), and each arc has a constant radius (i.e., is a segment of a circle). The walls 306 between the drive surfaces can take many different forms and shapes, as was described hereinabove with regard to the other embodiments. As shown, the profile can include a center post 308. If provided in the middle of a recess of an installed fastener, the center post would provide that the fastener is tamper-resistant in that only a specific tool can be used to uninstall the fastener. Additionally, the fact that the profile has seven lobes would prevent non-conforming drive tools, such as those having the wrong number of lobes (i.e., 4 lobes, 5 lobes or 6 lobes) from being used on the fastener.

With regard to any of the lobes and flutes mentioned herein, any of them can be provided as being tapered or untapered (i.e., progressing down into the recess, or down along the bit or punch), as well as being equal or unequal (i.e., in terms of whether or not the width is uniform, progressing down into the recess or down along the bit or punch).

**Claims**

1. A fastener (220, 300) comprising at least one of an external drive profile and a recess (222,300); a plurality of lobes (226, 302) on at least one of the external drive profile and the recess, each lobe comprising a plurality of drive surfaces (230, 304) each of said drive surfaces formed of at least one polygon involute, each polygon involute comprising a plurality of arcs, each arc having a radius (R1, R2), each arc being concave relative to the centre of the fastener and each arc having a constant but different radius, **characterised in that** said fastener further comprises a plurality of walls (232, 306) which extend between adjacent said lobes (226, 302), wherein said walls are either flat, convex circular, convex vertex, concave circular or concave vertex relative to the centre of the fastener; and wherein said recess (222,300) further comprises a centre post (224, 308).

2. A fastener as recited in claim 1, wherein each lobe is formed of polygon involutes comprised of two arcs.

3. A fastener as recited in claim 2, wherein each arc has a different radius, and each arc has a constant radius where in each is a segment of a circle.

4. A fastener as recited in claim 1, wherein a top surface of said external drive profile is at least of flat and curved.

5. A fastener as recited in claim 4, wherein the top surface of said external drive profile has a recess formed therein.

6. A fastener as recited in claim 1, wherein each of the lobes is truncated.

7. A fastener as recited in claim 1, wherein the walls taper at least one of inwardly and outwardly.

**Patentansprüche**

1. Befestigungselement (220, 300), umfassend mindestens eines von einem äußeren Antriebsprofil und einer Aussparung (222, 300); eine Vielzahl von Lappen (226, 302) auf mindestens einem von dem äußeren Antriebsprofil und der Aussparung, wobei jeder Lappen eine Vielzahl von Antriebsflächen (230, 304) umfasst, wobei jede der Antriebsflächen aus mindestens einer Polygon-Evolvente ausgebildet ist, wobei jede Polygon-Evolvente eine Vielzahl von Bögen umfasst, wobei jeder Bogen einen Radius (RI, R2) aufweist, wobei jeder Bogen relativ zur Mitte des Befestigungselements konkav ist und jeder Bogen einen konstanten aber unterschiedlichen Radius aufweist, **dadurch gekennzeichnet, dass** das Befestigungselement ferner eine Vielzahl von Wänden (232, 306) umfasst, die sich zwischen den benachbarten Lappen (226, 302) erstrecken, wobei die Wände entweder flach, konvexkreisförmig, konvexscheitelartig, konkav-kreisförmig oder konkavscheitelartig relativ zur Mitte des Befestigungselements sind; und wobei die Aussparung (222, 300) ferner einen Mittelpfosten (224, 308) umfasst.

2. Befestigungselement nach Anspruch 1, wobei jeder Lappen aus Polygon-Evolventen ausgebildet ist, die aus zwei Bögen bestehen.

3. Befestigungselement nach Anspruch 2, wobei jeder Bogen einen unterschiedlichen Radius aufweist und jeder Bogen einen konstanten Radius aufweist, wobei jeder ein Kreissegment ist.

4. Befestigungselement nach Anspruch 1, wobei eine obere Fläche des äußeren Antriebsprofils mindestens flach und/oder gekrümmt ist.

5. Befestigungselement nach Anspruch 4, wobei die obere Fläche des äußeren Antriebsprofils eine darin ausgebildete Aussparung aufweist.

6. Befestigungselement nach Anspruch 1, wobei jeder der Lappen abgestumpft ist.

7. Befestigungselement nach Anspruch 1, wobei sich die Wände mindestens nach innen und/oder nach außen verjüngen.

**Revendications**

1. Attache (220, 300) comprenant au moins l'un parmi un profil d'entraînement externe et un évidement (222, 300) ; une pluralité de lobes (226, 302) sur au moins l'un parmi le profil d'entraînement externe et l'évidement, chaque lobe comprenant une pluralité de surfaces d'entraînement (230, 304), chacune desdites surfaces d'entraînement étant formée d'au moins une développante polygonale, chaque développante polygonale comprenant une pluralité d'arcs, chaque arc ayant un rayon (RI, R2), chaque arc étant concave par rapport au centre de l'attache et chaque arc ayant un rayon constant mais différent, **caractérisée en ce que** ladite attache comprend en outre une pluralité de parois (232, 306) qui s'étendent entre lesdits lobes adjacents (226, 302), dans laquelle lesdites parois sont soit plates, circulaires convexes, à sommet convexe, circulaires concaves ou à sommet concave par rapport au centre de l'attache ; et dans laquelle ledit évidement (222, 300) comprend en outre un montant central (224, 308).

2. Attache selon la revendication 1, dans laquelle chaque lobe est formé de développantes polygonales composées de deux arcs.

3. Attache selon la revendication 2, dans laquelle chaque arc a un rayon différent, et chaque arc a un rayon constant où dans chacun se trouve un segment de cercle.

4. Attache selon la revendication 1, dans laquelle une surface supérieure dudit profil d'entraînement externe est au moins plate et incurvée.

5. Attache selon la revendication 4, dans laquelle la surface supérieure dudit profil d'entraînement externe a un évidement formé à l'intérieur.

6. Attache selon la revendication 1, dans laquelle chacun des lobes est tronqué.

7. Attache selon la revendication 1, dans laquelle les parois s'effilent au moins vers l'intérieur et vers l'extérieur.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

FIG. 22

# FIG. 23

# FIG. 24

# FIG. 25

10

18

20

# FIG. 26

18

# FIG. 27

10

# FIG. 28

# FIG. 29

# FIG. 30

# FIG. 31

# FIG. 32

# FIG. 33

# FIG. 34

# FIG. 35

120

# FIG. 36

# FIG. 37

# FIG. 38

# FIG. 39

Plane 1

Plane 2

172

160

162

# FIG. 40

# FIG. 41

FIG. 42

FIG. 46

FIG. 50

FIG. 45

FIG. 49

FIG. 44

FIG. 48

FIG. 43

FIG. 47

FIG. 51

# FIG. 52

# FIG. 53

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 07202816
- US 62135390
- US 62395096
- US 5957645 A
- US 6186718 B1

**Non-patent literature cited in the description**

- **SHIH-HIS ; DANIEL C.H YANG.** Involute-Based Screw Driver Profiles With High Load Capacity. *Journal of Mechanical Design,* vol. 134